(19) Europäisches Patentamt / European Patent Office / Office européen des brevets

(11) **EP 2 130 782 B1**

(12) **EUROPEAN PATENT SPECIFICATION**

(45) Date of publication and mention
of the grant of the patent:
**12.07.2017 Bulletin 2017/28**

(21) Application number: **08739701.4**

(22) Date of filing: **02.04.2008**

(51) Int Cl.:
*B65D 65/40* (2006.01)     *B29C 49/08* (2006.01)
*B29C 49/22* (2006.01)     *B32B 27/36* (2006.01)
*B65D 1/00* (2006.01)      *C08J 5/00* (2006.01)
*B29L 9/00* (2006.01)      *B29L 22/00* (2006.01)

(86) International application number:
**PCT/JP2008/056590**

(87) International publication number:
**WO 2008/126744 (23.10.2008 Gazette 2008/43)**

(54) **PRESSURE-RESISTANT POLYESTER CONTAINER AND PROCESS FOR PRODUCING THE SAME**

DRUCKBESTÄNDIGER POLYESTERBEHÄLTER UND HERSTELLUNGSVERFAHREN DAFÜR

RÉCIPIENT DE POLYESTER RÉSISTANT À LA PRESSION ET SON PROCÉDÉ DE PRODUCTION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.04.2007 JP 2007099112**

(43) Date of publication of application:
**09.12.2009 Bulletin 2009/50**

(73) Proprietor: **Toyo Seikan Kaisha, Ltd.**
**Shinagawa-ku**
**Tokyo 141-8640 (JP)**

(72) Inventors:
• **SASAI, Misa**
**Yokohama-shi**
**Kanagawa 2400062 (JP)**

• **KIKUCHI, Atsushi**
**Yokohama-shi**
**Kanagawa 2400062 (JP)**
• **FUNAOKA, Shinichirou**
**Yokohama-shi**
**Kanagawa 2400062 (JP)**

(74) Representative: **Manley, Nicholas Michael**
**WP Thompson**
**8th Floor**
**1 Mann Island**
**Liverpool L3 1BP (GB)**

(56) References cited:
JP-A- 2003 012 023      JP-A- 2004 142 444
JP-A- 2004 142 444      JP-A- 2005 255 736
JP-A- 2006 027 701      JP-A- 2006 027 701
US-A- 5 972 448          US-B1- 6 265 038
US-B1- 6 846 532

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

This invention relates to a pressure-resistant biaxially stretch-blow molded polyester container having an intermediate layer of a functional resin. More specifically, the invention relates to such a pressure-resistant polyester container capable of maintaining excellent transparency for extended periods of time and to a process for producing the same.

Background Art:

In order to improve preservability of contents in a plastic packing container, a multilayer structure has heretofore been employed for the container walls, the inner and outer layers thereof being formed by using a polyester resin, and the intermediate layer thereof being formed by using an ethylene/vinyl alcohol copolymer or a xylylene group-containing polyamide resin for improving gas-barrier property or being formed by using a functional resin such as a cyclic olefin copolymer for improving water vapor (waster)-barrier property (patent document 1).

Attempts have, further, been made to blend the functional resin with an inorganic filler or other resin composition in order to further improve the function such as gas-barrier property or to impart other functions. For example, the following patent document 2 teaches blending a xylylene group-containing polyamide with an organic clay in order to further improve gas-barrier property of a xylylene group-containing polyamide resin. The manufacturing method employs melting and kneading using an intermeshing corotating twin screw extruder comprising at least a feed section (a) having a feed port (a), a kneading section (a), a feed section b having a feed port b, and a kneading section b provided in this sequence. The method includes: A step of feeding a specific polyamide A1 and organized clay B from the feed port (a) to the feed section (a); a step of mainly dispersing and mixing the polyamide A1 and the clay B by melting and kneading in the kneading section (a); a step of conveying the melted and kneaded substance from the kneading section (a) to the feed section b and feeding a specific polyamide A2 from the feed port b to the feeding section b; and a step of mainly distributing and mixing the melted and kneaded substance from the feeding section b and the polyamide A2 by melting and kneading in the kneading section b.

JP 2003 012 023 discloses a multi-layered plastic container including a resin layer mainly comprising a xylylene radical containing polyamide, a heat generation peak with crystallization measured by a differential scanning calorimeter (DSC) on the resin layer of at least a barrel is 10 J/g or less, and a half width of the maximum of a diffraction profile at $2\theta=0$ to 100 degrees measured by X-ray diffraction is 10 degrees or less, to improve transparency and characteristic in appearance of the multi-layered plastic container even after long-term storage and thermal treatment.

US 5 972 448 discloses a nanocomposite polymer container. The container is composed of a polymer material integrated with a plurality of nanosize particles of a clay mineral which acts to enhance the barrier properties of the container. The polymer material may be PET, COPET, or any mixture thereof. The nano- composite polymer container decreases the permeability of various gases without substantially altering the fabrication method for producing containers composed of PET or COPET material, and without altering the containers themselves. The nanocomposite polymer containers of the present invention are able to accomplish this is due to the minimal amount of clay integrated with the polymer material, between 0.1% and 10% weight of the container. The small amount of clay provides a substantial barrier due to the high aspect ratios of the clay particles which will vary between 100 and 2000. The nanocomposite polymer container may be produced using in situ polymerization, solution intercalaction, or melt exfoliation to integrate the clay mineral with the polymer material matrix. The clay mineral may be smectite, vermiculite, halloysite or any synthetic analog thereof, with a preference for the montmorillonite species of smectite clays.

Patent document 1:     JP-A-2005-067637
Patent document 2:     JP-A-2004-142444

Disclosure of the Invention:

Problems that the Invention is to Solve:

If a pressure-resistant polyester container of a multilayer structure having an intermediate layer of the above-mentioned functional resin is biaxially stretch-blow-molded under the same conditions as those for the pressure-resistant polyester container of the single layer, the intermediate layer undergoes whitening due to the crystallization induced by water that has permeated through the polyester resin layer after preserved for extended periods of time, and transparency is impaired. In particular, a pressure-resistant polyester container of a multilayer structure including an intermediate layer of a functional resin blended with a clay, has such a stretching property as to produce a large load at the time of being stretched and, therefore, tends to be whitened from the beginning of molding developing voids in the intermediate layer.

It is, therefore, an object of the present invention to provide a pressure-resistant polyester container effectively preventing whitening even after the passage of time and featuring excellent transparency despite of using, as an intermediate layer, a functional resin composition obtained by blending a functional resin with a clay, and a process for producing the same.

Means for Solving the Problems:

According to the present invention, there is provided a pressure-resistant polyester container having a multilayer structure comprising inner and outer layers of a polyester resin and at least one intermediate layer of a functional resin and obtained by stretch-blow molding, wherein in the container body portion, the inner layer of the polyester resin has a crystallinity of not less than 23% but not more than 29.5%, the outer layer thereof has a crystallinity of not less than 18% but not more than 25.4%, the average value of the crystallinity of the inner layer and the crystallinity of the outer layer is not less than 24% but not more than 26.4%, and a clay is dispersed in the functional resin.

In the pressure-resistant polyester container of the present invention, it is desired that the functional resin contains a polymetaxyleneadipamide or an ethylene/vinyl alcohol copolymer as a base material resin.

According to the present invention, further, there is provided a process for producing a pressure-resistant polyester container by biaxially stretch-blow-molding a multilayer preform which comprises inner and outer layers of a polyester resin and at least one intermediate layer of a functional resin in which a clay is dispersed, wherein the multilayer preform is biaxially stretch-blow-molded being heated at a temperature of 110 to 120°C so as to mold a multilayer container in which in the container body portion, the inner layer of the polyester resin has a crystallinity of not less than 23% but not more than 29.5%, the outer layer thereof has a crystallinity of not less than 18% but not more than 25.4%, and the average value of the crystallinity of the inner layer and the crystallinity of the outer layer is not less than 24% but is not more than 26.4%.

Effects of the Invention:

According to the pressure-resistant polyester container of the present invention, the functional resin composition used as the intermediate layer expresses excellent function effectively preventing the whitening even after the passage of time and maintaining excellent transparency over extended periods of time. Further, according to the process for producing the pressure-resistant polyester container of the invention, there is required no heat-fixing step that is required by the process for producing heat-resistant polyester containers, crystallinities of the inner and outer layers of the polyester resin in the container body portion lie in the abode-mentioned ranges, and it is made possible to efficiently produce the pressure-resistant polyester containers.

Brief Description of the Drawings:

[Fig. 1] is a view illustrating a sectional structure of a pressure-resistant polyester container of the present invention.
[Fig. 2] is a view illustrating a sectional structure of a pressure-resistant polyester container of the present invention.
[Fig. 3] is a side view of a pressure-resistant polyester container of the present invention.

Best Mode for Carrying Out the Invention:

According to the present invention, an important feature resides in that the a pressure-resistant polyester container has a multilayer structure comprising inner and outer layers of a polyester resin and at least one intermediate layer of a functional resin, wherein in the container body portion, the inner layer of the polyester resin has a crystallinity of not less than 23%, the outer layer thereof has a crystallinity of not less than 18%, the average value of the crystallinity of the inner layer and the crystallinity of the outer layer is not less than 24%, and a clay is dispersed in the functional resin.

As described above, the functional resin composition obtained by blending a functional resin with a clay creates a large load at the time of being stretched. Therefore, if a pressure-resistant polyester container having such a multilayer structure is formed by the same method as that of producing ordinary pressure-resistant polyester containers, the layer tends to be whitened from the beginning of molding, and the whitening further proceeds as the container is preserved for extended periods of time.

The present inventors have discovered that the pressure-resistant polyester container having the above multilayer structure becomes free from the above problem if, in the container body portion, the crystallinity of the inner layer of the polyester resin is set to be not less than 23%, the crystallinity of the outer layer thereof is set to be not less than 18%, and the average value of the crystallinity of the inner layer and the crystallinity of the outer layer is set to be not less than 24%.

That is, the polyester container of which the inner and outer layers of the polyester resin have crystallinities of not less than the above values, permits little water to permeate into the intermediate layer. Therefore, the molecular motion in the intermediate layer is suppressed, crystallization is suppressed and, as a result, whitening due to crystallization is effectively prevented.

According to the present invention, the crystallinity Xc of the polyester resin forming the inner and outer layers is measured by a density method, i.e., calculated in compliance with the following formula,

$$Xc = [dc(d - da)/d(dc - da)] \times 100$$

wherein da is a density of a completely amorphous polyester resin, dc is a density of a theoretically completely crystallized polyester resin, and d is a density of a sample.

The actions and effects of the invention will become obvious from the results of Examples described later.

That is, in the pressure-resistant polyester containers of the invention of which the inner layer of the polyester resin has a crystallinity of not less than 23%, the outer layer thereof has a crystallinity of not less than 18% and the average value thereof is not less than 24%, haze of the container increases little and transparency is maintained in the aging test conducted at 50°C, 80%RH, 72 hours (Examples 1 to 5) while in the pressure-resistant polyester containers failing to satisfy even one of the above conditions, haze increases and transparency is impaired (Comparative Examples 1, 4 and 5).

The pressure-resistant polyester container of the invention having the above-mentioned features can be obtained by a process for producing a pressure-resistant polyester container by biaxially stretch-blow-molding a multilayer preform which comprises inner and outer layers of a polyester resin and at least one intermediate layer of a functional resin, i.e., by biaxially stretch-blow-molding the multilayer preform while heating it at a temperature of 110 to 120°C.

A heat-resistant polyester container is, usually, obtained by the biaxial stretch-blow molding method followed by heat setting or by a two-step blow-molding method having a step of heat treatment. The heat-resistant polyester container of this kind is free of distortion and has high crystallinity. According to the present invention, however, a high degree of crystallinity can be imparted to the container through neither the step of heat setting nor the step of heat treatment, and the obtained polyester container exhibits resistance against the pressure and heat.

That is, when the pressure-resistant polyester container of the invention is obtained by biaxially stretch-blow-molding the preform while heating it in the above temperature range, the inner layer of the polyester resin has a crystallinity of not less than 23%, the outer layer thereof has a crystallinity of not less than 18% and the average value thereof is not less than 24% (Examples 1 to 5). When the pressure-resistant polyester container is obtained by biaxially stretch-blow-molding the preform according to a conventional method while heating it at a temperature of lower than 110°C, the inner and outer layers of the polyester resin have crystallinities that do not lie in the range of the present invention. As a result, transparency is impaired after preserved for extended periods of time (Comparative Examples 1 and 4).

(Intermediate layer)

The intermediate layer of the pressure-resistant polyester container of the invention uses a functional resin composition obtained by dispersing a clay in a functional resin that serves as a base material resin.

That is, the functional resin, usually, produces a large stress upon elongation, and tends to lose transparency upon elongation; i.e., the function of the functional resin tends to be easily impaired. Besides, if a clay is dispersed in the functional resin to improve gas-barrier property, more stress is produced upon elongation than by the functional resin alone impairing the functions such as transparency and gas-barrier property due to the generation of voids, therefore, this problem specially corresponds to the object of the present invention.

Further, the functional resin is, generally, highly hygroscopic, exhibits a decreased glass transition temperature due to absorbing moisture after having been molded and, further, permits molecules to easily move accelerating the crystallization. If a clay is dispersed in the functional resin in order to improve the gas-barrier property, the crystallization is promoted at the time of molding due to the effect of the nucleating agent. After molded, therefore, a majority proportion of those which can be crystallized will have already been crystallized among those amorphous portions or will have been assuming a structure that can be little crystallized. Therefore, the intermediate layer is suppressed from being crystallized while being preserved and, as a result, whitening due to crystallization can be effectively prevented.

As the functional resin used for the invention, there can be exemplified known functional resins such as those having gas-barrier property, water vapor-barrier property, oxygen-absorbing property and oxygen-absorbing/gas-barrier property. Concrete examples include gas-barrier polyamide resins such as polymetaxylyleneadipamide and polymetaxylylenesebacamide, as well as ethylene/vinyl alcohol copolymer and water vapor-barrier cyclic olefin resin. According to the present invention, excellent actions and effects can be strikingly exhibited when there is used a polymetaxylene adipamide or an ethylene/vinyl alcohol copolymer that produces a large stress upon elongation and excellent gas-barrier property.

As the clay, there can be used mica, vermiculite and smectite and, preferably, lamellar silicate of the 2-octaheral type or the 3-octahedral type having a charge density of 0.25 to 0.6. As the ones of the 2-octahedral type, there can be exemplified montmorillonite, beidellite and nontronite. As the ones of the 3-octahedral type, there can be exemplified hectorite and suponite.

The clay used in the invention is, particularly desirably, the clay that is treated to be swollen with an organic property-imparting agent. Among the above clays, in this case, the montmorillonite has highly swelling property, and the swelling spreads among the layers due to the infiltration of the organic property-imparting agent.

As the organic property-imparting agent, a quaternary ammonium salt can be preferably used. More preferably, there can be used a quaternary ammonium salt having at least one or more alkyl groups with not less than 12 carbon atoms, such as trimethyldodecyl ammonium salt and trimethyltetradecyl ammonium salt.

It is desired that the clay-containing functional resin contains the clay at a ratio of 1 to 10 parts by weight and, particularly, 1 to 8 parts by weight per 100 parts by weight of the functional resin. If the amount of clay is smaller than the above range, the gas-barrier property cannot be sufficiently obtained by the addition of the clay as compared to when the clay is added in an amount in the above range. If the amount of clay is larger than the above range, on the other hand, the moldability becomes poorer than when the clay is added in an amount in the above range.

Further, the above clay-containing functional resin may be blended with an oxidizing organic component and a transition metal catalyst in combination to impart oxygen-absorbing property thereto.

As the oxidizing organic component, there can be exemplified those having a functional group on a side chain or at a terminal and that can be oxidized. Concretely, there can be exemplified polyene oligomer or polymer modified with an acid or an acid anhydride, such as butadiene and butadiene modified with anhydrous maleic acid. As the transition metal catalyst, there can be used metal components of the Group VIII of periodic table, such as iron, cobalt and nickel.

It is desired that the oxidizing organic component is blended in an amount of 2 to 10 parts by weight per 100 parts by weight of the functional resin and that the transition metal catalyst is blended in an amount of at least 300 ppm calculated as metal.

The functional resin used in the invention can be blended with the clay or the oxidizing component and transition metal catalyst in combination, as well as known resin blending agents such as disoxidant, filler, coloring agent, heat stabilizer, aging stabilizer, antioxidant, anti-aging agent, photo stabilizer, ultraviolet ray absorber, antistatic agent, lubricant such as metal soap or wax, and reforming resin or rubber in a range in which they do not impair the object of the invention according to known recipe.

(Inner and outer layers)

As the polyester resin used for the inner and outer layers of the invention, there can be used a known polyester resin comprising a dicarboxylic acid component and a diol component.

As the dicarboxylic acid component, it is desired that not less than 50% and, particularly, not less than 80% of the dicarboxylic acid component is a terephthalic acid from the standpoint of mechanical properties and thermal properties. However, carboxylic acid components other than the terephthalic acid may be contained, as a matter of course. As the carboxylic acid components other than the terephthalic acid, there can be exemplified isophthalic acid, naphthalenedicarboxylic acid, p-$\beta$-oxyethoxybenzoic acid, biphenyl-4,4'-dicarboxylic acid, diphenoxyethane-4,4'-dicarboxylic acid, 5-sodiumsulfoisophthalic acid, hexahydroterephthalic acid, adipic acid and sebacic acid.

As the diol component, it is desired that not less than 50% and, particularly, not less than 80% of the diol component is an ethylene glycol from the standpoint of mechanical properties and thermal properties. As the diol component other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

Further, the above dicarboxylic acid component and the diol component may contain trifunctional or more highly functional polybasic acid and polyhydric alcohol; i.e., polybasic acids such as trimellitic acid, pyromellitic acid, hemimellitic acid, 1,1,2,2-ethanetetracarboylic acid, 1,1,2-ethanetricarboxylic acid, 1,3,5-pentanetricarboxylic acid, 1,2,3,4-cyclopentanetetracarboxylic acid and biphenyl-3,4,3',4'-tetracarboxylic acid, and polyhydric alcohols such as pentaerythritol, glycerol, trimethylolpropane, 1,2,6-hexanetriol, sorbitol and 1,1,4,4-tetrakis(hydroxymethyl)cyclohexane.

It is desired that the polyester resin used for the inner and outer layers of the invention has an intrinsic viscosity in a range of 0.60 to 1.40 dL/g as measured at 30°C by using a phenol/tetrachloroethane mixed solvent at a weight ratio of 1:1. It is, further, desired that the polyester resin has a melting point (Tm) of 200 to 275°C to improve the heat resistance and workability of the multilayer container. It is, further, desired that the polyester resin has a glass transition point of not lower than 30°C and, particularly, in a range of 50 to 120°C.

The polyester resin used for the inner and outer layers of the invention can be blended with known blending agents for resins, such as coloring agent, antioxidizing agent, stabilizer, various antistatic agents, parting agent, lubricant and nucleating agent in a range in which they do not impair the quality of the finally molded article according to a known recipe.

(Multilayer structure)

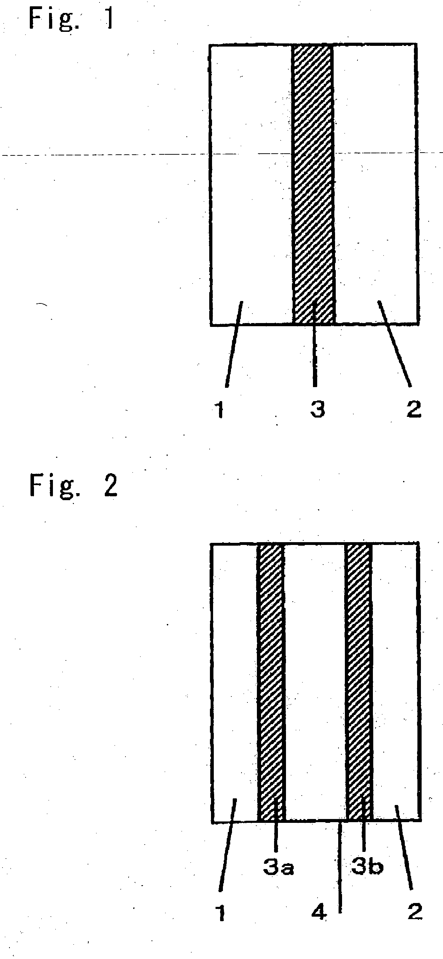

The pressure-resistant polyester container of the invention can employ various layer constitutions so far as it includes inner and outer layers of a polyester resin and at least one intermediate layer of a functional resin composition blended with a clay. The layer constitution may have the intermediate layer 3 of the functional resin composition blended with the clay between the inner layer 1 and the outer layer 2 of the polyester resin as shown in Fig. 1. Or, as shown in Fig. 2, the layer constitution may include the inner layer 1 and the outer layer 2 of the polyester resin, and two intermediate layers 3a, 3b of the functional resin interposed between the inner layer 1 of the polyester resin and an intermediate layer 4 of the polyester resin, and between the outer layer 2 of the polyester resin and the intermediate layer 4 of the polyester resin.

In producing a multilayer container, though usually not necessary, an adhesive resin can be interposed among the resin layers. As the adhesive resin, there can be exemplified a thermoplastic resin that contains carbonyl (-CO-) groups based on carboxylic acid, carboxylic acid anhydride, carboxylate, carboxylic acid amide or carboxylic acid ester on a main chain or on a side chain at a concentration of 1 to 700 milliequivalents (meq) / 100 g of the resin and, particularly, 10 to 500 meq/100 g of the resin. Preferred examples of the adhesive resin include ethylene/acrylic acid copolymer, ionically crosslinked olefin copolymer, maleic anhydride-grafted polyethylene, maleic anhydride-grafted polypropylene, acrylic acid-grafted polyolefin, ethylene/vinyl acetate copolymer and copolymerized polyester.

In the pressure-resistant polyester container of the present invention, it is desired that the body portion has an overall thickness in a range of 200 to 600 $\mu$m and, particularly, 240 to 500 $\mu$m though it may vary depending upon the volume (weight) of the container and the use of the container.

It is important that the thickness of the layer comprising the clay-containing functional resin composition which is the intermediate layer is less than 20 $\mu$m from the standpoint of transparency of the container and, particularly, in a range of 5 to 15 $\mu$m, and that the thickness of the intermediate layer is in a range of 3 to 10% of the overall thickness of the body portion.

If there are made present a plurality of intermediate layers comprising the clay-containing functional resin composition, it is desired that each intermediate layer has a thickness of less than 20 $\mu$m and, particularly, in a range of 8 to 15 $\mu$m, and the intermediate layers as a whole have a thickness in a range of 3 to 20% of the overall thickness of the body portion.

(Process for production)

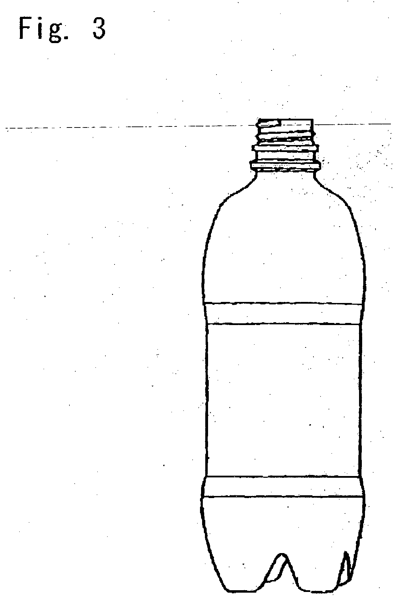

The pressure-resistant polyester container of the present invention can be produced having a known pressure-resistant bottom shape such as a so-called petaloid shape as shown in Fig. 3 or champaign shape with a recessed portion at the center of the bottom by molding a preform having the above-mentioned multilayer structure, heating the preform at a high temperature of 110 to 120°C and, particularly, 112 to 118°C, stretch-drawing the preform in the axial direction and, at the same time, blow-stretching the preform in the circumferential direction. According to the present invention as described above, the crystallinities of the inner and outer layers can be set to lie in the above-mentioned ranges without effecting the heat setting.

The multilayer preform can be produced by a known molding method, such as a coextrusion-molding method which co-extrudes the clay-containing functional resin composition and the polyester resin together; a simultaneous injection-molding method which simultaneously injects the clay-containing functional resin composition and the polyester resin into a metal mold; a sequential injection method which sequentially injects the polyester resin, the clay-containing functional resin composition and the polyester resin into the metal mold; and a compression-molding method which compression-molds a coextruded product of the clay-containing functional resin composition and the polyester resin by using a core metal mold and a cavity metal mold.

When any one of these systems is employed, the preform that is molded should be in a supercooled state, i.e., in an amorphous state, and it is desired that the intermediate layer comprising the clay-containing functional resin composition is sealed in the inner and outer layers of the thermoplastic polyester.

It is desired that molding the multilayer preform and stretch-blow-molding the preform are conducted by a cold parison system as described above. It is, however, also allowable to conduct the stretch-blow molding by a hot parison system without completely cooling the multilayer preform that is molded.

Prior to conducting the stretch-blow molding, the preform is preheated up to a stretching temperature by such means as hot air, infrared-ray heater or high-frequency induction heating. Here, according to the present invention, it is particularly important to stretch-blow the preform by heating it at a temperature higher than that of the ordinary stretch-blow molding, i.e., at 110 to 120°C and, particularly, at 112 to 118°C. If the temperature of the preform is lower than the above temperature, the clay-containing functional resin composition produces large stress upon elongation and, therefore, acceleration of crystallization due to stretch orientation cannot be expected, transparency decreases after preserved for extended periods of time, voids easily occurs, and the transparency of the obtained polyester container is deteriorated. On the other hand, if the temperature of the preform is higher than the above range, the preform is softened, and the center of the preform is deviated at the time of stretch-blow molding deteriorating the moldability. Therefore, the thickness of the obtained polyester container becomes nonuniform, and the preform is crystallized before being stretch-blow-molded and can no longer be molded.

The heated preform is fed into a known stretch-blow-molding machine, set into a metal mold, drawn and stretched in the axial direction by pushing in a stretching rod, and is stretched in the circumferential direction-by blowing a fluid. Here, it is desired to heat the interior of the multilayer preform by using a heating body heated at 300 to 600°C and/or by using the hot air of 150 to 220°C.

That is, in biaxially stretch-blow-molding the preform heated at a temperature in the above range, the interior of the preform has been heated by inserting the heating body heated at a high temperature and/or by blowing the hot air of a high temperature, whereby the temperature in the interior of the preform becomes more high and the temperature in the preform is maintained high at the time of being stretch-blow-molded, promoting the relaxation of strain thereof and relaxing the strain of the intermediate layer comprising the clay-containing functional resin composition that produces a large stress upon elongation, effectively suppressing the deterioration of functions such as transparency and gas-barrier property.

It is desired that the time for internal heating varies depending upon the temperature for preheating the preform and the setpoint temperature of the heating body used for the internal heating and is, preferably, in a range of 8 to 20 seconds and, particularly, 10 to 15 seconds. It is, further, desired that the hot air used for the stretch-blow molding is blown into the preform set in the metal mold for 2 to 3 seconds.

The stretching ratios of the pressure-resistant polyester container which is the final product are, preferably, in ranges of 1.5 to 25 times as the area ratio, 1.2 to 6 times as the stretching ratio in the axial direction, and 1.2 to 4.5 times as the stretching ratio in the circumferential direction.

The pressure-resistant polyester container obtained by the process of the invention has, in the container body portion thereof, a crystallinity of the inner layer of the polyester resin of not less than 23%, a crystallinity of the outer layer thereof of not less than 18%, and an average value of the crystallinity of the inner layer and the crystallinity of the outer layer of not less than 24%, and is capable of maintaining such an excellent haze as not larger than 6% for extended periods of time even when preserved for extended periods of time.

Owing to the clay-containing functional resin composition used as the intermediate layer, the pressure-resistant polyester container of the invention possesses various functions such as gas-barrier property, oxygen-absorbing property and water vapor-barrier property, and can be effectively used as a container preventing flavor of the content from being decreased by oxygen. The contents that can be filled are, particularly preferably, such beverages as beer, carbonated soft drinks, juice-containing carbonated beverages, that produce pressure by themselves.

EXAMPLES

The invention will be further described by way of the following Examples.

[Measuring the crystallinity]

A test piece of a width of 5 mm and a length of 5 mm was cut out from the center of the body portion of the obtained multilayer bottle. The inner polyester layer and the outer polyester layer were peeled off from the test piece. The sample was dipped in a water/calcium nitrate type density-gradient tube at 20°C for 2 hours and, thereafter, the position of the sample was read to find the density $d(g/cm^3)$ of the test piece. The crystallinity $\chi c(\%)$ was found from the obtained density in compliance with the following formula,

$$\chi c = [1.455 \times (d - 1.335)/(d \times (1.455 - 1.335))] \times 100$$

wherein 1.335 is a density of the completely amorphous polyethylene terephthalate resin, and 1.455 is a density of the theoretically completely crystallized polyethylene terephthalate resin.

[Measuring the haze]

Test pieces of a width of 30 mm and a length of 40 mm were cut out from the centers of body portions of the multilayer bottle just after molded and of the multilayer bottle after preserved in an environment of 50°C 80%RH for 72 hours. The test pieces in their multilayer form were measured for their hazes (%) by using a color computer [S & M COLOUR COMPUTER MODEL SM-4: manufactured by Suga Shikenki Co.].

[Example 1]

By using a coinjection molding machine equipped with three injection machines, i.e., an injection machine (a) for inner and outer PET layers, an injection machine (b) for an intermediate PET layer and an injection machine (c) for a functional resin, a two-kind-five-layer (a/c/b/c/a) multilayer preform having inner, outer and intermediate layers of PET and layers of a functional resin among them weighing 33 g was obtained by a successive injection molding method by feeding a polyethylene terephthalate (PET) resin dried at 150°C for 4 hours [BK6180, manufactured by Nihon Unipet Co.] to the injection machines (a) and (b), and by feeding, as a functional resin, a resin composition obtained by melt-kneading a polymetaxylyleneadipamide resin (MXD6)[T620, manufactured by Nihon Unipet Co.] and 3% by weight of a swell-treated natural montmorillonite by using a biaxial extruder, to the injection machine (c).

By using a quartz heater, the preform was preheated from the exterior thereof up to a surface temperature of 111°C, and was biaxially stretch-blow-molded at stretching ratios of 3.0 times longitudinally and 3.0 times transversely to obtain a multilayer bottle having a volume of 516 ml, and thicknesses of the layers in the body portion, i.e., inner PET layer (100 $\mu$m)/inner functional resin layer (10 $\mu$m)/intermediate PET layer (110 $\mu$m) /outer functional resin layer (11 $\mu$m) /outer PET layer (130 $\mu$m).

The obtained multilayer bottle was measured for its crystallinities of the inner PET layer and the outer PET layer and hazes.

[Example 2]

A multilayer bottle was molded in the same manner as in Example 1 but preheating the multilayer preform up to the surface temperature of 118°C, and was measured for its crystallinities and hazes.

[Example 3]

A multilayer bottle was molded in the same manner as in Example 1 but using, as a functional resin, a resin composition obtained by melt-kneading an ethylene/vinyl alcohol copolymer (EVOH) (Eval F101: manufactured by Kuraray Eval Co.) and 3% by weight of a swell-treated natural montmorillonite by using a biaxial extruder, and preheating the multilayer preform up to the surface temperature of 114°C, and was measured for its crystallinities and hazes.

[Example 4]

A multilayer bottle was molded in the same manner as in Example 3 but preheating the multilayer preform up to the surface temperature of 116°C, and was measured for its crystallinities and hazes.

[Example 5]

A multilayer bottle was molded in the same manner as in Example 1 but preheating the multilayer preform up to the surface temperature of 113°C, and was measured for its crystallinities and hazes.

[Comparative Example 1]

A multilayer bottle was molded in the same manner as in Example 1 but preheating the multilayer preform up to the surface temperature of 109°C, and was measured for its crystallinities and hazes.

[Comparative Example 2]

A multilayer bottle was molded in the same manner as in Example 1 but preheating the multilayer preform up to the surface temperature of 121°C. The thickness distribution of the bottle was uneven.

[Comparative Example 3]

It was attempted to mold a multilayer bottle in the same manner as in Example 1 but preheating the multilayer preform up to the surface temperature of 127°C. However, the preform was crystallized and could not be molded.

[Comparative Example 4]

A multilayer bottle was molded in the same manner as in Example 3 but preheating the multilayer preform up to the surface temperature of 107°C, and was measured for its crystallinities and hazes.

[Comparative Example 5]

A multilayer bottle was molded in the same manner as in Example 5 but using the polymetaxylyleneadipamide resin (MXD6) [T620, manufactured by Nihon Unipet Co.] as the functional resin, and was measured for its crystallinities and hazes.

Table 1

| | Functional resin | Crystallinity of inner layer | Crystallinity of outer layer (%) | Average crystallinity (%) | Preform-preheating temperature (°C) | Initial haze (%) | Haze after preserved at 50°C 80%RH 72h (%) |
|---|---|---|---|---|---|---|---|
| Ex. 1 | MXD6 + clay | 23.5 | 24.7 | 24.1 | 111 | 5.2 | 5.9 |
| Ex. 2 | MXD6 + clay | 29.5 | 19.2 | 24.4 | 118 | 4.2 | 4.5 |
| Ex. 3 | EVOH + clay | 25.5 | 25.4 | 25.5 | 114 | 3.7 | 4.7 |
| Ex. 4 | EVOH + clay | 27.8 | 25.0 | 26.4 | 116 | 5.0 | 5.6 |
| Ex. 5 | MXD6 + clay | 25.2 | 24.8 | 25.0 | 113 | 5.3 | 6.0 |
| Comp. Ex. 1 | MXD6 + clay | 22.1 | 26.2 | 24.2 | 109 | 7.8 | 10.0 |
| Comp. Ex. 2 | MXD6 + clay | 30.5 | 17.8 | 24.2 | 121 | *1 | *1 |
| Comp. Ex. 3 | MXD6 + clay | *2 | *2 | *2 | 127 | *2 | *2 |
| Comp. Ex. 4 | EVOH + clay | 23.4 | 20.6 | 22.0 | 107 | 8.0 | 9.5 |
| Comp. Ex. 5 | MXD6 | 25.0 | 23.3 | 24.2 | 113 | 2.1 | 7.3 |

*1: the thickness distribution of the bottle was nonuniform
*2: could not be molded due to crystallization of the preform

**Claims**

1.  A pressure-resistant biaxially stretch-blow molded polyester container having a multilayer structure comprising inner and outer layers of a polyester resin and at least one intermediate layer of a stretch functional resin, wherein in the container body portion, the inner layer of the polyester resin has a crystallinity of not less than 23% but not more than 29.5%, the outer layer thereof has a crystallinity of not less than 18% but not more than 25.4%, the average value of the crystallinity of the inner layer and the crystallinity of the outer layer is not less than 24% but not more than 26.4%, and a clay is dispersed in the functional resin; and wherein the crystallinity is measured as described in the description specification.

2. The pressure-resistant biaxially stretch-blow molded polyester container according to claim 1, wherein said functional resin contains a polymetaxyleneadipamide or an ethylene/vinyl alcohol copolymer as a base material resin.

3. A process for producing a pressure-resistant polyester container according to any previous claim, by biaxially stretch-blow-molding a multilayer preform which comprises inner and outer layers of a polyester resin and at least one intermediate layer of a functional resin in which a clay is dispersed, wherein said multilayer preform is biaxially stretch-blow-molded being heated at a temperature of 110 to 120°C so as to mold a multilayer container in which in the container body portion, the inner layer of the polyester resin has a crystallinity of not less than 23% but not more than 29.5%, the outer layer thereof has a crystallinity of not less than 18% but not more than 25.4%, and the average value of the crystallinity of the inner layer and the crystallinity of the outer layer is not less than 24% but is not more than 26.4%.

**Patentansprüche**

1. Druckbeständiger biaxial streckblasgeformter Polyesterbehälter mit einem mehrschichtigen Aufbau, umfassend eine innere und eine äußere Schicht aus einem Polyesterharz und mindestens eine Zwischenschicht aus einem Harz mit Dehnfunktion, wobei in dem Behälterkörperabschnitt die innere Schicht des Polyesterharzes eine Kristallinität von nicht weniger als 23 % aber nicht mehr als 29,5 % aufweist, die äußere Schicht davon eine Kristallinität von nicht weniger als 18 % aber nicht mehr als 25,4 % aufweist, der Durchschnittswert der Kristallinität der inneren Schicht und der Kristallinität der äußeren Schicht nicht weniger als 24 % aber nicht mehr als 26,4 % beträgt und ein Ton in dem Funktionsharz verteilt ist; und wobei die Kristallinität wie in der Beschreibungsspezifikation beschrieben gemessen wird.

2. Druckbeständiger biaxial streckblasgeformter Polyesterbehälter nach Anspruch 1, wobei das Funktionsharz ein Polymetaxylenadipamid oder ein Ethylen-Vinylalkohol-Copolymer als Grundmaterialharz enthält.

3. Verfahren zum Herstellen eines druckbeständigen Polyesterbehälters nach einem der vorangehenden Ansprüche durch biaxiales Streckblasformen eines mehrschichtigen Vorformlings, der eine innere und eine äußere Schicht aus einem Polyesterharz und mindestens eine Zwischenschicht aus einem Funktionsharz, in dem ein Ton verteilt ist, umfasst, wobei der mehrschichtige Vorformling biaxial streckblasgeformt wird und bei einer Temperatur von 110 bis 120 °C erwärmt wird, um einen mehrschichtigen Behälter zu formen, wobei in dem Behälterkörperabschnitt die innere Schicht des Polyesterharzes eine Kristallinität von nicht weniger als 23 % aber nicht mehr als 29,5 % aufweist, die äußere Schicht davon eine Kristallinität von nicht weniger als 18 % aber nicht mehr als 25,4 % aufweist, und der Durchschnittswert der Kristallinität der Innenschicht und der Kristallinität der Außenschicht nicht weniger als 24 % beträgt aber nicht mehr als 26,4 % beträgt.

**Revendications**

1. Récipient en polyester moulé par soufflage avec étirage biaxial résistant à la pression ayant une structure multicouche comprenant des couches interne et externe d'une résine polyester et au moins une couche intermédiaire d'une résine fonctionnelle étirée, dans lequel dans la partie de corps de récipient, la couche interne de la résine polyester a une cristallinité non inférieure à 23 % mais non supérieure à 29,5 %, la couche externe de celle-ci a une cristallinité non inférieure à 18 % mais non supérieure à 25.4 %, la valeur moyenne de la cristallinité de la couche interne et de la cristallinité de la couche externe est non inférieure à 24 % mais non supérieure à 26,4 %, et une argile est dispersée dans la résine fonctionnelle ; et dans lequel la cristallinité est mesurée comme cela est décrit dans la spécification descriptive.

2. Récipient de polyester moulé par soufflage avec étirage biaxial résistant à la pression selon la revendication 1, dans lequel la résine fonctionnelle contient un poly (métaxylène adipamide) ou un copolymère éthylène/alcool vinylique comme résine de matériau de base.

3. Procédé de production d'un récipient en polyester résistant à la pression selon l'une quelconque des revendications précédentes, en moulant par soufflage avec étirage biaxial une préforme multicouche qui comprend des couches interne et externe d'une résine polyester et au moins une couche intermédiaire d'une résine fonctionnelle dans lequel une argile est dispersée, dans lequel ladite préforme multicouche est moulée par soufflage avec étirage biaxial, étant chauffée à une température de 110 à 120 °C de manière à mouler un récipient multicouche dans lequel dans la partie de corps de récipient, la couche interne de la résine polyester a une cristallinité non inférieure à 23 % mais non supérieure à 29,5 %, la couche externe de celle-ci a une cristallinité non inférieure à 18 % mais non supérieure à 25,4 %, et la valeur moyenne de la cristallinité de la couche interne et de la cristallinité de la couche externe est non inférieure à 24 % mais non supérieure à 26,4 %.

Fig. 1

1     3     2

Fig. 2

1     3a     4     3b     2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003012023 B
- US 5972448 A
- JP 2005067637 A
- JP 2004142444 A